(19) **Europäisches Patentamt**

**European Patent Office**

**Office européen des brevets**

(11) **EP 0 899 895 B1**

(12) **FASCICULE DE BREVET EUROPEEN**

(45) Date de publication et mention
de la délivrance du brevet:
**24.11.2004 Bulletin 2004/48**

(51) Int Cl.[7]: **H04B 1/707**, H04L 27/233

(21) Numéro de dépôt: **98401948.9**

(22) Date de dépôt: **30.07.1998**

(54) **Démodulation cohérente des signaux à spectre étalé sans signal pilote**

Koheränte Demodulation von Spreizspektrumsignalen ohne Pilotensignal

Coherent demodulation of spread spectum signals without pilot signal

(84) Etats contractants désignés:
**DE ES FI FR GB IT SE**

(30) Priorité: **07.08.1997 FR 9710131**

(43) Date de publication de la demande:
**03.03.1999 Bulletin 1999/09**

(73) Titulaire: **ALCATEL**
**75008 Paris (FR)**

(72) Inventeur: **Roux, Pierre**
**95100 Argenteuil (FR)**

(74) Mandataire: **Lamoureux, Bernard et al**
**Compagnie Financière Alcatel,**
**Département de Propriété Industrielle,**
**5, rue Noel Pons**
**92734 Nanterre Cedex (FR)**

(56) Documents cités:
**EP-A- 0 647 046**   **EP-A- 0 675 606**
**EP-A- 0 762 700**   **US-A- 4 841 544**
**US-A- 5 103 459**

## Description

Le domaine de l'invention est celui des transmissions numériques à étalement de fréquence, et notamment, mais non exclusivement, des transmissions CDMA (pour "Code Division Multiple Access" en langue anglaise). En effet, la technique CDMA, qui consiste à multiplier un signal source (compris dans une bande de fréquence commune) par un code spécifique, constitue une application de l'étalement de fréquence.

D'une façon générale, dans de tels systèmes de transmission, on utilise à l'émission des dispositifs de modulation à étalement de fréquence. Ces derniers font subir à des signaux d'entrée (ou signaux source) un étalement de fréquence puis une modulation en quadrature, de façon à obtenir des signaux à émettre. Classiquement (et c'est le cas dans la suite de la présente description), on considère que le ou chaque signal d'entrée présente un débit D, tandis que le signal à émettre et le signal reçu présentent chacun un débit N*D, où N est le facteur d'étalement.

L'invention concerne plus précisément des dispositifs de démodulation cohérente, du type visant à régénérer, à partir de signaux reçus, les signaux d'entrée des dispositifs précités de modulation à étalement de fréquence.

Dans le cadre de la présente invention, on s'intéresse uniquement au cas d'un étalement de fréquence de type complexe (correspondant à l'utilisation de deux séquences d'étalement en quadrature). En effet, l'étalement réel (correspondant à l'utilisation d'une unique séquence d'étalement) présente un handicap de performances qui le rend sans intérêt.

Généralement, on distingue deux familles de transmission à étalement de fréquence :

- les transmissions de type monocanal : le dispositif de modulation reçoit un unique signal d'entrée auquel il fait subir un étalement de fréquence puis une modulation en quadrature, de façon à générer le signal à émettre ;
- les transmissions de type multicanaux : le dispositif de modulation reçoit une pluralité de signaux d'entrée et fait subir à chacun d'entre eux une multiplication par un code orthogonal distinct (code de Walsh par exemple), de façon à obtenir une pluralité de canaux. Il regroupe cette pluralité de canaux sur un même signal multicanaux, auquel il fait subir un étalement de fréquence puis une modulation en quadrature, de façon à obtenir le signal à émettre.

Dans chacune de ces deux familles, on peut encore distinguer deux sous-familles, correspondants respectivement aux cas où le(s) signal(ux) d'entrée est (sont) réel(s) ou complexe(s). Généralement, un signal d'entrée complexe au débit D résulte du passage d'un signal réel au débit 2.D dans un convertisseur série/parallèle de type 1 vers 2.

L'invention a de nombreuses applications, telles que par exemple les systèmes de radiocommunication numériques cellulaires.

En effet, dans les systèmes cellulaires, les transmissions monocanal sont typiquement utilisées dans le cas d'un canal montant (station mobile vers station de base), où la sation mobile est supposée se satisfaire de l'existence d'un canal unique de communication vers la station de base. On rappelle que plusieurs stations mobiles peuvent émettre chacune "en monocanal" dans la même bande de fréquence. En effet, comme elles utilisent des séquences d'étalement différentes, ou bien des phases différentes d'une séquence d'étalement commune, la station de base peut séparer les signaux émis par les différentes stations mobiles.

Par ailleurs, dans les systèmes cellulaires, les transmissions multicanaux sont typiquement utilisées dans le cas d'un canal descendant (station de base vers station mobile), où la station de base doit communiquer avec plusieurs stations mobiles. Le signal émis par la station de base est alors un agrégat de plusieurs canaux, diffusé vers l'ensemble des stations mobiles. Ces canaux sont séparés entre eux par l'utilisation de codes, dits "orthogonaux" dans la mesure où ils permettent à un récepteur d'une station mobile d'extraire le canal qui lui est destiné sans être gêné par la présence des autres canaux.

On notera cependant que la tendance actuelle, dans l'activité de normalisation des futurs réseaux cellulaires de type CDMA, est d'introduire la transmission multicanaux également dans le sens montant (station mobile vers station de base). Cette tendance est justifiée par la souplesse qui en résulte (en particulier pour les applications multimédia), ainsi que par la possibilité d'adopter une démodulation cohérente (qui est plus performante que la démodulation non cohérente devant être utilisée dans les dispositifs de réception multicanaux).

On présente ci-dessous les techniques connues de démodulation (avec leurs inconvénients respectifs), pour chacune des deux familles de transmission précitées.

Auparavant, il convient de rappeler qu'un dispositif de démodulation (ou récepteur) a pour tâche de regénérer le ou les signaux d'entrée (ou signal(ux) source) à partir du signal qu'il reçoit. Le signal reçu correspond au signal émis affecté de diverses perturbations. On s'intéresse ici à la perturbation que constitue le déphasage. Après démodulation (par deux porteuses en quadrature) du signal reçu, le signal démodulé résultant est un signal complexe affecté d'une rotation de phase. Cette rotation correspond précisément au déphasage. On sait que le déphasage est dû au milieu de propagation ainsi qu'aux opérations de modulation et de démodulation (et notamment à l'asynchronisme entre les oscillateurs locaux alimentant le modulateur et le démodulateur). Le déphasage évolue dans le temps, c'est un phénomène dynamique. Le traitement de ce déphasage varie selon qu'il s'agit d'une transmission de type monocanal ou multicanaux.

Dans le cas d'une transmission de type monocanal, on utilise actuellement une démodulation non cohérente, ce qui a des conséquences aussi bien sur le récepteur que sur l'émetteur. Le principe de la démodulation non cohérente est de choisir une séquence transmise qui puisse être interprétée à la réception sans la connaissance du déphasage apporté par le canal.

Malheureusement, l'adoption de la démodulation non cohérente se paye par un handicap de performances.

Dans le cas d'une transmission de type multicanaux, on utilise acuellement une démodulation cohérente, ce qui suppose la connaissance du déphasage variable introduit par les opérations de transmission, modulation et démodulation. La solution actuelle pour acquérir cette connaissance consiste à consacrer l'un des canaux à la transmission d'un pilote. En d'autres termes, on transmet généralement un tout "1" sur l'un des signaux d'entrée. Le récepteur exploite la présence du pilote pour faire l'estimation du canal et en particulier pour déterminer le déphasage apporté par le canal. Fort de cette connaissance, le récepteur peut alors annuler le déphasage.

Malheureusement, l'utilisation d'un pilote entraîne elle aussi une chute des performances du système. En effet, le canal qui porte le pilote n'est pas disponible pour transmettre des données utiles. En outre, on est souvent conduit à attribuer au canal pilote une puissance supérieure à celle d'un canal normal, en particulier lorsque les variations dynamiques sont rapides. Or, ce surplus de puissance émise n'étant pas porteur d'information, les performances de la liaison s'en trouvent dégradées.

L'invention a notamment pour objectif de pallier ces différents inconvénients de l'état de la technique.

Plus précisément, l'un des objectifs de la présente invention est de fournir un dispositif monocanal de démodulation cohérente, utilisable dans le cas d'une transmission de type monocanal, et présentant de meilleures performances que les dispositifs classiques précités de démodulation non cohérente.

L'invention a également pour objectif de fournir un dispositif multicanaux de démodulation cohérente, utilisable dans le cas d'une transmission de type multicanaux, et présentant de meilleures performances que les dispositifs classiques précités de démodulation cohérente avec pilote.

Un autre objectif de l'invention est de fournir de tels dispositifs monocanal et multicanaux de démodulation cohérente, permettant d'estimer et de corriger le déphasage induit notamment par le milieu de propagation, sans faire d'hypothèse sur les signaux transmis, et en particulier sans transmettre de pilote.

Un objectif complémentaire de l'invention est de fournir un ensemble de réception à plusieurs chemins de diversité, qui conserve les avantages liés aux dispositifs (monocanal ou multicanaux) compris dans cet ensemble.

Ces différents objectifs, ainsi que d'autres qui apparaîtront par la suite, sont atteints selon l'invention à l'aide d'un dispositif monocanal de démodulation cohérente, du type visant à régénérer, à partir d'un signal reçu, un signal d'entrée d'un dispositif monocanal de modulation à étalement complexe d'ordre N, ledit dispositif monocanal de modulation à étalement complexe faisant subir audit signal d'entrée un étalement complexe puis une modulation en quadrature, de façon à obtenir un signal à émettre, ledit signal d'entrée présentant un débit D, ledit signal à émettre et ledit signal reçu présentant chacun un débit N*D,
caractérisé en ce qu'il comprend notamment :

- des moyens de démodulation en quadrature, générant un signal démodulé, au débit N*D, à partir dudit signal reçu ;
- des moyens de désétalement complexe, générant un signal désétalé, au débit N*D, à partir dudit signal démodulé ;
- des moyens de sommation sur N échantillons, générant un signal sommé, au débit D, à partir dudit signal désétalé ;
- une boucle d'estimation et de correction du déphasage induit sur ledit signal démodulé, ladite boucle comprenant :

    * des moyens de prise de l'argument dudit signal sommé ;
    * des moyens d'application d'une fonction prédéterminée permettant de ramener l'argument du signal sommé dans une plage [- π/(2.x), π/(2.x) [, où x est égal à 1 ou 2 selon que ledit signal d'entrée est réel ou complexe, le résultat de l'application de ladite fonction prédéterminée audit argument du signal sommé constituant une estimation dudit déphasage ;
    * des moyens de soustraction de ladite estimation du déphasage à la phase dudit signal démodulé ou à celle dudit signal désétalé ;

- des moyens de regénération dudit signal d'entrée à partir dudit signal sommé, comprenant eux-mêmes des moyens de levée d'une ambiguïté statique résiduelle de phase induite par l'application de ladite fonction prédéterminée.

Dans le cas d'une transmission de type monocanal, le principe général de l'invention consiste donc à utiliser une démodulation cohérente sans pilote, qui est sans influence sur l'émetteur et permet d'améliorer les performances de la démodulation. On rappelle que dans l'art antérieur, c'est une démodulation non cohérente qui est utilisée dans ce cas.

D est important de noter que la démodulation cohérente de l'invention est effectuée sans aucune connaissance du signal transmis. En effet, l'estimation du déphasage est obtenue en produisant une valeur signée à partir de l'argument du signal sommé. Plus précisément, on applique au signal sommé une fonction prédéterminée, elle-même basée sur une fonction modulo, permettant de ramener l'argument de ce signal sommé dans une plage autour de zéro.

L'estimation du déphasage est utilisée dans une boucle d'asservissement de la phase (par exemple du premier ordre). Ainsi, le système converge vers une erreur nulle (c'est-à-dire vers une correction parfaite du déphasage).

On notera que l'application de la fonction prédéterminée introduit en contrepartie une ambiguïté statique résiduelle de phase, qu'il convient de lever. Toutefois, une telle ambiguïté de phase est un phénomène connu dans les systèmes sans étalement de fréquence (ou non CDMA), où il est lié à la récupération de la porteuse. Par conséquent, pour lever une telle ambiguïté de phase, on connaît déjà des solutions qui peuvent être appliquées ici. En tout état de cause, même si la solution adoptée pour lever l'ambiguïté de phase entraîne une légère dégradation des performances, cette légère dégradation est très faible en comparaison de celle qu'apporterait l'utilisation d'une démodulation non cohérente.

L'invention concerne également un dispositif multicanaux de démodulation cohérente, du type visant à régénérer, à partir d'un signal reçu, une pluralité de signaux d'entrée d'un dispositif multicanaux de modulation à étalement complexe d'ordre N, ledit dispositif multicanaux de modulation faisant subir à chacun desdits signaux d'entrée une multiplication par un code orthogonal distinct, de façon à obtenir une pluralité de canaux, ladite pluralité de canaux étant regroupés sur un même signal multicanaux, ledit signal multicanaux subissant un étalement complexe puis une modulation en quadrature, de façon à obtenir un signal à émettre, chacun desdits signaux d'entrée présentant un débit D, ledit signal à émettre et ledit signal reçu présentant chacun un débit N*D, ledit dispositif multicanaux de démodulation cohérente comprenant notamment :

- des moyens de démodulation en quadrature, générant un signal démodulé, au débit N*D, à partir dudit signal reçu ;

- des moyens de désétalement complexe, générant un signal désétalé, au débit N*D, à partir dudit signal démodulé,

caractérisé en ce que ledit dispositif multicanal de démodulation cohérente comprend en outre :

- une pluralité de branches de traitement, chacune associée à un canal donné parmi ladite pluralité et comprenant notamment :

  * des moyens de multiplication dudit signal désétalé par le code orthogonal propre audit canal donné, de façon à obtenir un signal désétalé propre audit canal donné, au débit N*D ;

  * des moyens de sommation sur N échantillons, générant un signal sommé propre audit canal donné, au débit D, à partir dudit signal désétalé propre audit canal donné ;

- une boucle d'estimation et de correction du déphasage induit sur ledit signal démodulé, ladite boucle comprenant :

  * dans chacune desdites branches de traitement :

    - des moyens de prise de l'argument dudit signal sommé propre audit canal donné ;
    - des moyens d'application d'une fonction prédéterminée permettant de ramener l'argument du signal sommé propre audit canal donné dans une plage [- $\pi/(2.x)$, $\pi/(2.x)$ [, où x est égal à 1 ou 2 selon que ledit signal d'entrée dudit canal donné est réel ou complexe, le résultat de l'application de ladite fonction prédéterminée audit argument du signal sommé propre audit canal donné constituant une estimation dudit déphasage ;

  * des moyens de moyennage des estimations dudit déphasage fournies par lesdites branches de traitement, de façon à obtenir une estimation moyenne dudit déphasage ;
  * des moyens de soustraction de ladite estimation moyenne du déphasage à la phase dudit signal démodulé ou à celle dudit signal désétalé ;

- dans chacune desdites branches de traitement, des moyens de regénération dudit signal d'entrée dudit canal donné à partir dudit signal sommé propre audit canal donné, comprenant eux-mêmes des moyens de levée d'une ambiguïté statique résiduelle de phase induite par l'application de ladite fonction prédéterminée.

Dans le cas d'une transmission de type multicanaux, le principe général de l'invention consiste donc à utiliser une démodulation cohérente sans pilote. On rappelle que dans l'art antérieur, c'est une démodulation cohérente avec pilote qui est utilisée dans ce cas.

Les commentaires qui précèdent (en relation avec le dispositif monocanal) sur la démodulation cohérente de l'invention, s'appliquent également au cas du dispositif multicanaux.

Le dispositif multicanaux de l'invention se distingue du dispositif monocanal précité essentiellement en ce qu'une estimation du déphasage est effectuée sur chaque signal sommé propre à un canal donné. A partir de toutes ces estimations, on calcule une estimation moyenne, qui permet de corriger de façon globale la phase du signal reçu. En outre, une ambiguïté statique résiduelle de phase doit être levée sur chaque signal sommé propre à un canal donné.

On présente maintenant diverses caractéristiques communes aux dispositifs multicanal et multicanaux de démodulation cohérente de l'invention.

Préférentiellement, ladite fonction prédéterminée peut s'écrire :

$$f(\Phi) = ((\Phi + \pi/(2.x)) \% (\pi/x)) - \pi/(2.x),$$

où % est la fonction "modulo".

On rappelle que x est égal à 1 ou 2 selon que ledit signal d'entrée est réel ou complexe.

Avantageusement, ladite boucle comprend en outre au moins certains des moyens appartenant au groupe comprenant :

- des moyens de multiplication de ladite estimation du déphasage, ou de ladite estimation moyenne du déphasage, par un scalaire prédéterminé, de façon à régler les caractéristiques dynamiques de ladite boucle ;
- des moyens d'intégration de ladite estimation du déphasage, ou de ladite estimation moyenne du déphasage, sur une durée prédéterminée, de façon à obtenir une estimation cumulée dudit déphasage.

De façon avantageuse, ledit ou chacun desdits signaux d'entrée appartient au groupe comprenant :

- les signaux d'entrée réels au débit D (cas x = 1) ;
- les signaux d'entrée complexes au débit D (cas x = 2), générés chacun par un convertisseur série/parallèle 1 vers 2, à partir d'un signal source réel au débit 2*D.

Il est clair qu'en termes de débit, il est préférable d'utiliser des signaux d'entrée complexes.

Avantageusement, lesdits moyens de regénération du signal d'entrée ou de chacun desdits signaux d'entrée comprennent en outre au moins certains des moyens appartenant au groupe comprenant :

- des moyens de prise de la partie réelle, si ledit signal d'entrée est un signal réel;
- des moyens de seuillage ;
- des moyens de décodage de type Viterbi, si des moyens de codage convolutif sont mis en oeuvre à l'émission.

Dans un mode de réalisation particulier de l'invention, lesdits moyens de levée d'une ambiguïté statique résiduelle de phase comprennent des moyens de codage/décodage différentiel.

On notera que cette solution présente un phénomène de multiplication du taux d'erreur (dans un rapport deux ou moins) entraînant une légère dégradation des performances. Cependant, cette légère dégradation est très faible en comparaison de celle qu'apporterait l'utilisation d'une démodulation différentielle (ou non cohérente).

Selon une variante avantageuse, dans le cas où des moyens de codage convolutif sont mis en oeuvre à l'émission et où lesdits moyens de regénération du signal d'entrée comprennent des moyens de décodage de type Viterbi, alors lesdits moyens de levée d'une ambiguïté statique résiduelle de phase comprennent :

- des moyens de décalage de phase, permettant de décaler, d'une valeur choisie parmi un ensemble prédéterminé de valeurs, la phase du signal présent en entrée desdits moyens de décodage de type Viterbi ;
- des moyens d'analyse du signal en sortie desdits moyens de décodage de type Viterbi, indiquant auxdits moyens de décalage de phase le choix d'une des valeurs de décalage, en fonction du résultat de ladite analyse.

Cette variante s'applique notamment (mais non exclusivement) lorsque le code convolutif utilisé n'est pas transparent aux ambiguïtés de phase. En effet, s'il n'y a pas transparence, la solution précédente (codage/décodage différentiel) est inapplicable. Dans ce cas, cette non transparence peut être mise à profit pour mettre en oeuvre la présente variante qui ne présente pas, lui, le phénomène de multiplication des erreurs évoqué plus haut. En effet, dans le cas où l'ambiguïté de phase résiduelle ne vaut pas zéro, l'analyse du signal de sortie du décodeur (par exemple comparaison de la métrique cumulée par rapport à un seuil prédéterminé) permet de détecter si la valeur choisie pour le décalage de phase est celle qui convient. En essayant les différentes valeurs de décalage de phase possibles (procédé d'essais et d'erreurs), on détermine la meilleure valeur de décalage, ce qui revient à lever l'ambiguïté de phase.

Dans ce mode de réalisation particulier ou dans cette variante, ledit ensemble prédéterminé de valeurs de décalage de phase comprend les valeurs suivantes :

- 0 et $\pi$, si ledit ou chacun desdits signaux d'entrée est un signal réel ;
- 0, $\pi/2$, $\pi$ et $3\pi/2$, si ledit ou chacun desdits signaux d'entrée est un signal complexe.

L'invention concerne aussi un ensemble de réception comprenant au moins deux dispositifs monocanal ou multicanaux de démodulation cohérente tels que précités, correspondant chacun à un chemin de diversité distinct,

caractérisé en ce qu'il comprend, pour ledit signal d'entrée ou pour chacun desdits signaux d'entrée, des moyens de regénération dudit signal d'entrée à partir des différents signaux sommés fournis par les moyens de sommation de chacun desdits chemins de diversité, et en ce que lesdits moyens de regénération comprennent eux-mêmes :

- des moyens de combinaison desdits différents signaux sommés, de façon à obtenir un signal combiné final présentant un gain maximal ;
- des moyens de levée de l'ambiguïté statique résiduelle de phase dudit signal combiné final, induite par l'application, sur chacun desdits chemins de diversité, de ladite fonction prédéterminée.

Selon l'invention, l'ensemble de réception détermine d'abord un signal combiné (résultant de la combinaison des signaux associés aux différents chemins) de façon qu'il présente un gain maximal, puis lève l'ambiguïté de phase sur ce signal combiné. La mesure du gain se fait par exemple par mesure de la valeur absolue.

On rappelle que dans le cas de la diversité, la levée de l'ambiguïté de phase se complique un peu puisqu'il faut lever l'ambiguïté sur chacun des chemins de diversité. En effet, si aucune disposition n'est prise, on prend le risque de combiner les chemins en opposition de phase et non pas en phase.

De façon avantageuse, lesdits moyens de combinaison des différents signaux sommés comprennent $n_G$ groupe(s) de moyens en cascade, avec $n_G = n_S - 1$, où $n_s$ est le nombre de signaux sommés à combiner ($n_S \geq 2$), chaque groupe de moyens comprenant :

- des moyens de décalage de phase, permettant de décaler, d'une valeur choisie parmi un ensemble prédéterminé de valeurs, la phase d'un premier desdits différents signaux sommés ou d'un signal combiné présent en sortie d'un groupe de moyens précédent, de façon à générer un signal sommé à phase décalée ;
- des moyens d'addition dudit signal sommé à phase décalée avec un autre desdits différents signaux sommés, de façon à générer un signal combiné ;
- des moyens de pilotage desdits moyens de décalage de phase, assurant un choix final de la valeur de décalage tel que ledit signal combiné présente un gain maximal,

un groupe de moyens ne recevant le signal combiné généré par le groupe de moyens précédent que lorsque lesdits moyens de pilotage dudit groupe de moyens précédent ont effectué ledit choix final,
le signal combiné généré par le dernier groupe de moyens constituant ledit signal combiné final.

Ainsi, on combine d'abord le premier chemin avec le second, puis le troisième avec le signal résultant de la combinaison des deux premiers, etc.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

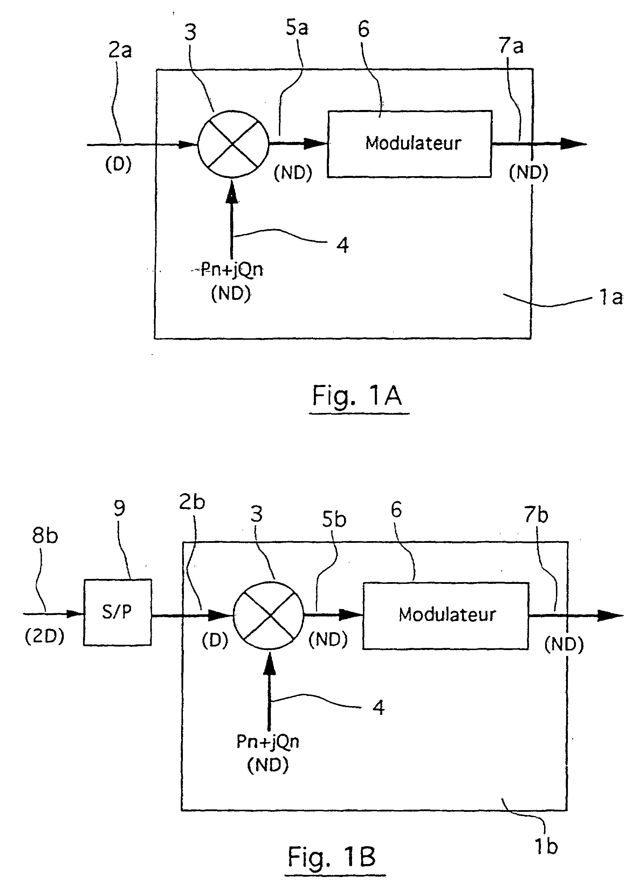

- les figures 1A à 1D présentent chacune un schéma synoptique d'un dispositif classique de modulation à étalement de fréquence, pour les types de transmission suivants :

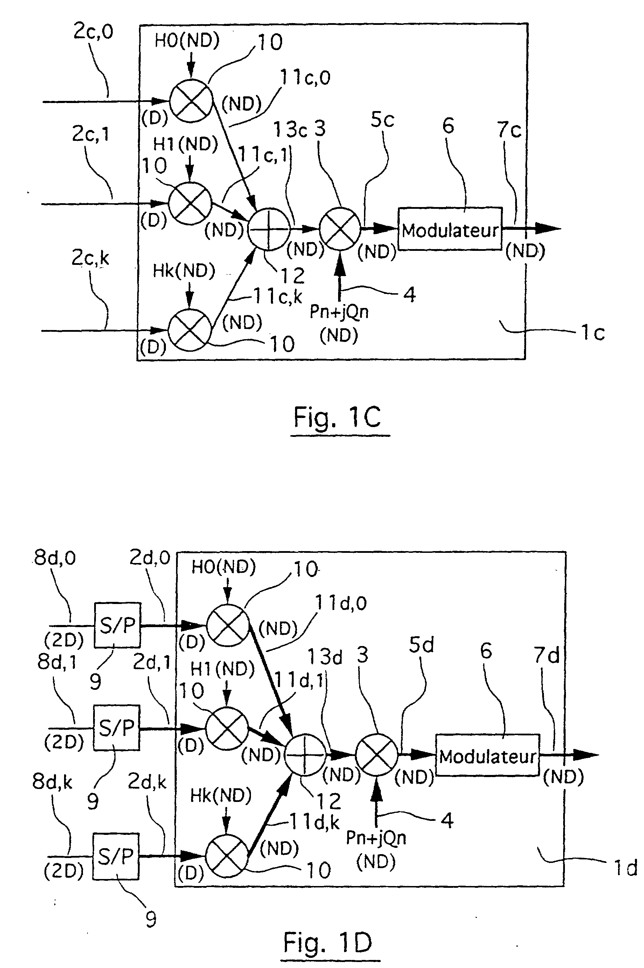

  * monocanal avec étalement complexe d'un signal réel (fig.1A) ;
  * monocanal avec étalement complexe d'un signal complexe (fig.1B) ;
  * multicanaux avec étalement complexe d'un signal réel (fig.1C) ;
  * multicanaux avec étalement complexe d'un signal complexe (fig.1D) ;

- les figures 2A à 2D présentent chacune un schéma synoptique d'un mode de réalisation particulier d'un dispositif de démodulation cohérente selon l'invention, respectivement pour les types de transmission des figures 1A à 1D ;
- les figures 3 et 4 présentent chacune un schéma simplifié d'un mode de réalisation préférentiel des moyens de levée d'une ambiguïté statique résiduelle de phase, tels qu'apparaissant respectivement sur les figures 2A et 2C d'une part, et 2B et 2D d'autre part ; et
- la figure 5 présente un schéma synoptique d'un mode de réalisation particulier d'un ensemble, selon l'invention, de réception à plusieurs chemins de diversité.

On rappelle maintenant, en relation avec les figures 1A à 1D, les différents types de transmission à étalement de fréquence. Les figures 1A et 1B correspondent au cas d'une transmission de type monocanal, respectivement lorsque le signal d'entrée est réel (fig. 1A) ou complexe (fig.1B). Les figures 1C et 1D correspondent au cas d'une transmission de type multicanaux, respectivement lorsque les signaux d'entrée sont réels (fig.1C) ou complexes (fig.1D).

La convention adoptée dans toutes les figures est que les signaux réels sont représentés avec des traits fins, tandis que les signaux complexes sont représentés avec des traits épais. Par ailleurs, un même élément est associé à une même référence sur toutes les figures.

Dans le cas d'une transmission de type monocanal avec étalement complexe d'un signal réel (fig.1A), le dispositif $1_a$ de modulation à étalement de fréquence reçoit un unique signal d'entrée $2_a$, supposé numérique et constitué d'un train binaire au débit D. Un signal étalé

$5_a$ est obtenu par multiplication (3) du signal d'entrée $2_a$ par un signal complexe 4, noté (Pn + j Qn). Pn et Qn sont deux trains binaires pseudo-aléatoires au débit N*D, avec N le facteur d'étalement. Le signal étalé $5_a$, qui est un signal complexe au débit N*D, est fourni aux deux entrées d'un modulateur 6 à deux porteuses en quadrature. Le signal en sortie du modulateur 6, également au débit N*D, constitue le signal à émettre $7_a$.

Dans le cas d'une transmission de type monocanal avec étalement complexe d'un signal complexe (fig.1B), le dispositif $1_b$ de modulation à étalement de fréquence se distingue de celui de la figure 1A uniquement en ce que le signal d'entrée $2_b$ est complexe et non pas réel. Ce signal d'entrée complexe $2_b$, qui est au débit D, résulte par exemple du passage d'un signal source réel $8_b$, au débit 2.D, dans un convertisseur série/parallèle 9 de type 1 vers 2.

Dans le cas d'une transmission de type multicanaux avec étalement complexe d'un signal réel (fig. 1C), le dispositif $1_c$ de modulation à étalement de fréquence reçoit une pluralité de signaux d'entrée $2_{c,0}$ à $2_{c,k}$. Chacun de ces signaux d'entrée $2_{c,0}$ à $2_{c,k}$ est multiplié (10) par un code orthogonal distinct H0 à Hk (code de Walsh par exemple), de façon à obtenir une pluralité de canaux $11_{c,0}$ à $11_{c,k}$. Cette pluralité de canaux $11_{c,0}$ à $11_{c,k}$ est regroupée (12) sur un même signal multicanaux $13_c$. Un signal étalé $5_c$ est obtenu par multiplication (3) du signal multicanaux $13_c$ par un signal complexe 4, noté Pn + j Qn. Le signal étalé $5_c$, qui est un signal complexe au débit N*D, est fourni aux deux entrées d'un modulateur 6 à deux porteuses en quadrature. Le signal en sortie du modulateur 6, également au débit N*D, constitue le signal à émettre $7_c$.

Dans le cas d'une transmission de type multicanaux avec étalement complexe d'un signal complexe (fig.1D), le dispositif $1_d$ de modulation à étalement de fréquence se distingue de celui de la figure 1C uniquement en ce que chacun des signaux d'entrée $2_{d,0}$ à $2_{d,k}$ est complexe et non pas réel. Chacun des signaux d'entrée complexes $2_{d,0}$ à $2_{d,k}$, qui est au débit D, résulte par exemple du passage d'un signal source réel parmi une pluralité $8_{d,0}$ à $8_{d,k}$, au débit 2.D, dans un convertisseur série/parallèle 9 de type 1 vers 2.

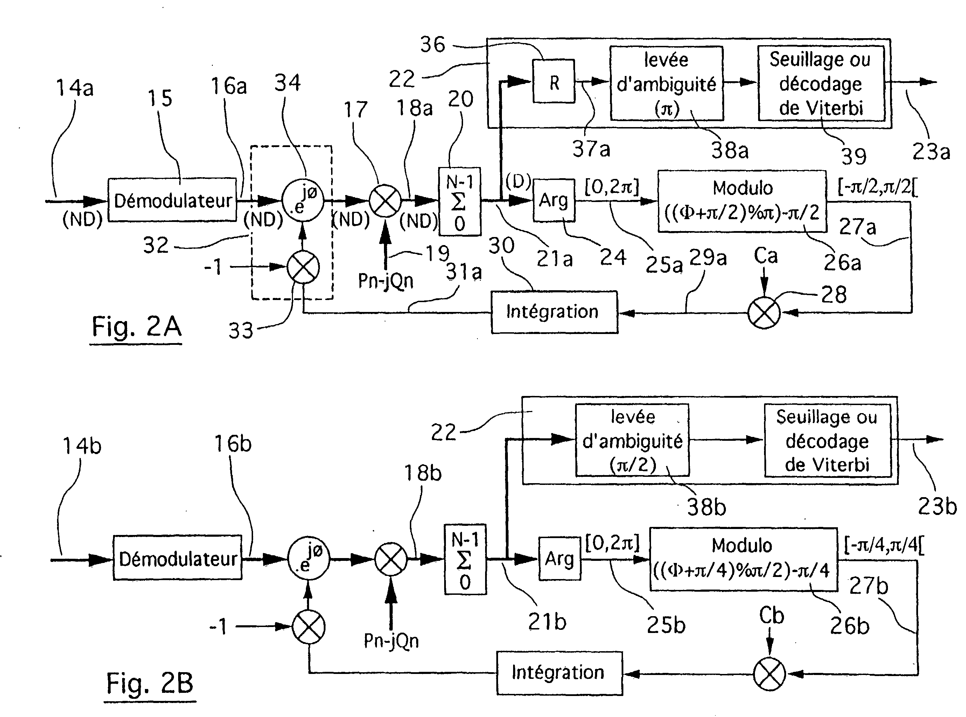

On présente maintenant, en relation avec les figures 2A à 2D, quatre modes de réalisation d'un dispositif de démodulation cohérente selon l'invention, correspondant respectivement aux quatre types de transmission des figures 1A à 1D.

Dans le premier mode de réalisation présenté sur la figure 2A, le dispositif de démodulation cohérente est du type monocanal et reçoit un signal $14_a$ résultant de la transmission, à travers un milieu de propagation donné, du signal $7_a$ émis par le dispositif de modulation $1_a$ de la figure 1A.

Dans ce premier mode de réalisation, le dispositif de démodulation cohérente comprend notamment :

- un démodulateur en quadrature 15, générant un signal démodulé $16_a$ (au débit N*D) à partir du signal reçu $14_a$ ;
- des moyens 17 de désétalement complexe générant un signal désétalé $18_a$ (au débit N*D) à partir du signal démodulé $16_a$. Ce désétalement complexe est réalisé par multiplication par le signal complexe 19, noté (Pn - j Qn), conjugué du signal 4 utilisé pour l'étalement ;
- des moyens 20 de sommation sur N échantillons, générant un signal sommé $21_a$ (au débit D) à partir du signal désétalé $18_a$ ;
- une boucle d'estimation et de correction du déphasage (cf description détaillée ci-dessous). On rappelle que ce déphasage est induit sur le signal démodulé $16_a$ notamment par les opérations de modulation, de transmission via le milieu de propagation et de démodulation ;
- des moyens 22 de regénération du signal d'entrée $2_a$ à partir du signal sommé $21_a$ (cf description détaillée ci-dessous). Avec une régénération parfaite, le signal régénéré $23_a$ est égal au signal d'entrée $2_a$ (fig.1A).

Dans l'exemple présenté sur la figure 2A, la boucle d'estimation et de correction du déphasage comprend :

- des moyens 24 de prise de l'argument $25_a$ du signal sommé $21_a$. Cet argument $25_a$ est compris dans la plage $[0, 2\pi[$ ;
- des moyens $26_a$ d'application d'une fonction prédéterminée permettant de ramener l'argument $25_a$ du signal sommé $21_a$ dans la plage $[-\pi/2, \pi/2[$. La valeur signée ainsi obtenue constitue une estimation brute $27_a$ du déphasage. Dans ce cas, la fonction prédéterminée s'écrit par exemple : $f_a(\Phi) = ((\Phi + \pi/2) \% \pi) - \pi/2$, où % est la fonction "modulo" ;
- des moyens 28 de multiplication de l'estimation brute $27_a$ du déphasage par un scalaire prédéterminé (ou coefficient de boucle) $c_a$, de façon à régler les caractéristiques dynamiques de la boucle ;
- des moyens 30 d'intégration du signal résultant $29_a$ (en sortie des moyens 28 de multiplication) sur une durée prédéterminée, de façon à obtenir une estimation cumulée $31_a$ du déphasage ;
- des moyens 32 de soustraction de l'estimation cumulée $31_a$ à la phase du signal démodulé 16a. Cette soustraction est réalisée par multiplication (33) de l'estimation cumulée $31_a$ par -1 (de façon à obtenir l'opposé de l'estimation cumulée), puis par multiplication (34) du signal démodulé 16a par $e^{j\phi}$, où $\phi$ est l'opposé de l'estimation cumulée $31_a$ du déphasage.

Il est à noter que, selon une variante, l'estimation cumulée $31_a$ peut être soustraite à la phase du signal désétalé $18_a$ (et non pas à la phase du signal démodulé $16_a$), puisque les opérations de démodulation et de désétalement étant linéaires, leur ordre d'exécution peut être inversé.

Dans l'exemple présenté sur la figure 2A, les moyens 22 de regénération comprennent :

- des moyens 36 de prise de la partie réelle $37_a$ du signal sommé $21_a$ ;
- des moyens $38_a$ de levée d'une ambiguïté statique résiduelle de phase, que présente la partie réelle $37_a$ du signal sommé $21_a$ et qui est induite par l'application de la fonction $f_a(\Phi)$ à l'argument $25_a$ du signal sommé $21_a$. Dans le cas présent, le signal d'entrée étant un signal réel, le déphasage statique résiduel peut être égal à 0 ou $\pi$. En d'autres termes, l'ambiguïté de phase est de $\pi$. (cf ci-dessous la description détaillée de ces moyens de levée de l'ambiguïté) ;
- des moyens 39 de traitement (par exemple seuillage ou décodage de type Viterbi), de façon à obtenir le signal régénéré $23_a$ après que l'ambiguïté de phase a été levée. Il est clair que le décodage de type Viterbi ne peut s'appliquer que si des moyens de codage convolutif sont mis en oeuvre à l'émission.

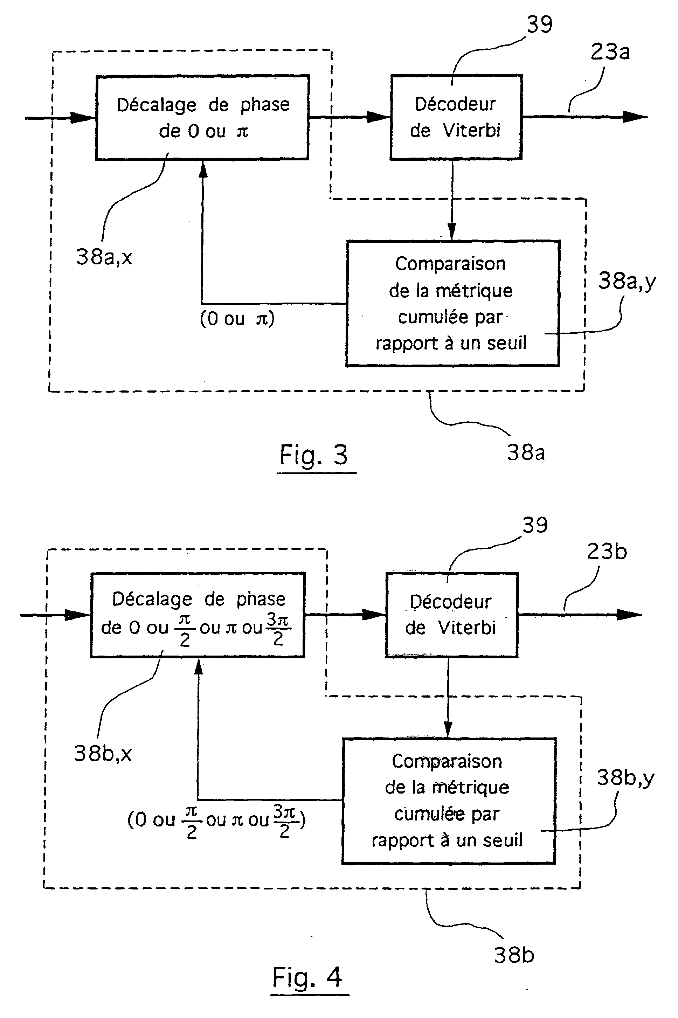

On présente maintenant, en relation avec la figure 3, un mode de réalisation particulier des moyens $38_a$ de levée d'une ambiguïté statique résiduelle de phase. Ce mode de réalisation particulier s'applique notamment si des moyens (non représentés) de codage convolutif sont mis en oeuvre à l'émission et si les moyens 22 de regénération du signal d'entrée comprennent des moyens 39 de décodage de type Viterbi, et dans le cas où le schéma de codage utilisé n'est pas transparent aux ambiguïtés de phase. Dans ce mode de réalisation particulier, les moyens $38_a$ de levée d'une ambiguïté statique résiduelle de phase comprennent :

- des moyens $38_{a,x}$ de décalage de phase, permettant de décaler de 0 ou $\pi$ la phase du signal présent en entrée des moyens 39 de décodage de type Viterbi ;
- des moyens $38_{a,y}$ d'analyse du signal $23_a$ en sortie des moyens 39 de décodage de type Viterbi, indiquant aux moyens $38_{a,x}$ de décalage de phase le choix d'une des valeurs de décalage (0 ou $\pi$), en fonction du résultat de l'analyse.

L'analyse précitée ($38_{a,y}$) consiste par exemple à comparer par rapport à un seuil prédéterminé la métrique cumulée du signal 23. Si le déphasage statique résiduel est égal à 0, le décodeur de Viterbi fonctionne normalement. En revanche, si le déphasage statique résiduel est égal à $\pi$, on constate en sortie du décodeur de Viterbi des métriques cumulées anormalement élevées, supérieures au niveau qu'elles atteindraient dans le cas maximal de perturbation. Après une telle constatation, on modifie la phase du signal appliqué à l'entrée du décodeur de Viterbi, en introduisant un décalage de $\pi$. Ainsi, l'ambiguïté statique résiduelle de phase est levée.

Il est clair que d'autres types de moyens de levée de l'ambiguïté statique résiduelle de phase peuvent être envisagés sans sortir du cadre de la présente invention. Ainsi, selon une variante, les moyens de levée de l'ambiguïté statique résiduelle de phase comprennent des moyens de codage/décodage différentiel.

Dans le second mode de réalisation présenté sur la figure 2B, le dispositif de démodulation cohérente est du type monocanal et reçoit un signal $14_b$ résultant de la transmission, à travers un milieu de propagation donné, du signal $7_b$ émis par le dispositif de modulation $1_b$ de la figure 1B.

Ce second mode de réalisation se distingue du premier mode de réalisation (cf fig.2A) essentiellement en ce que :

- les moyens 22 de regénération ne comprennent pas de moyens de prise de la partie réelle du signal sommé $21_b$, puisque le signal régénéré $23_b$ que l'on cherche à obtenir est du type complexe. On rappelle qu'en cas de régénération parfaite, le signal régénéré $23_b$ est égal au signal d'entrée $2_b$ (fig. 1B) ;
- dans la boucle d'estimation et de correction du déphasage, la fonction prédéterminée (appliquée par les moyens $26_b$) est telle qu'elle permet de ramener l'argument $25_b$ du signal sommé $21_b$ dans la plage $[-\pi/4, \pi/4[$. La valeur signée ainsi obtenue constitue une estimation brute $27_b$ du déphasage. Dans ce cas, la fonction prédéterminée s'écrit par exemple : $f_b(\Phi) = ((\Phi + \pi/4) \% \pi/2) - \pi/4$, où % est la fonction "modulo" ;
- les moyens $38_b$ de levée d'une ambiguïté statique résiduelle de phase sont légèrement différents de ceux de la figure 1A puisque le signal d'entrée étant un signal complexe, le déphasage statique résiduel peut être égal à 0, $\pi/2$, $\pi$ ou $3\pi/2$. En d'autres termes, l'ambiguïté de phase est de $\pi/2$ (elle est de $\pi$ pour un signal d'entrée réel).

Sur la figure 4, on présente un mode de réalisation particulier des moyens $38_b$ de levée de l'ambiguïté statique résiduelle de phase. On comprend aisément que ce mode de réalisation se déduit directement de celui présenté ci-dessus en relation avec la figure 3. En effet, il suffit de remplacer l'ensemble de valeurs de décalage de phase $\{0, \pi\}$ par l'ensemble $\{0, \pi/2, \pi, 3\pi/2\}$.

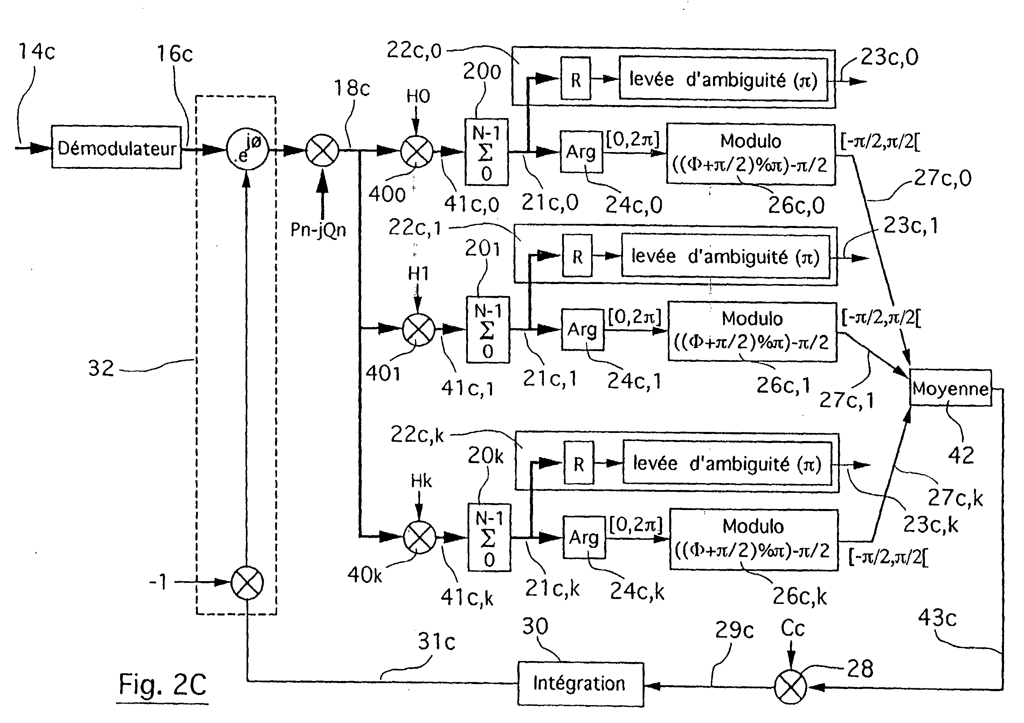

Dans le troisième mode de réalisation présenté sur la figure 2C, le dispositif de démodulation cohérente est du type mmulticanaux et reçoit un signal $14_c$ résultant de la transmission, à travers un milieu de propagation donné, du signal $7_c$ émis par le dispositif de modulation $1_c$ de la figure 1C.

Comme dans le premier mode de réalisation (fig.2A), un signal désétalé $18_a$ est généré, après passage dans un démodulateur en quadrature 15 puis dans des moyens 17 de désétalement.

Dans ce troisième mode de réalisation, on distingue en revanche une pluralité de branches de traitement du signal désétalé $18_a$. Chaque branche est associée à un canal donné parmi k+ 1 canaux, et comprend notamment (par exemple pour la ième branche, avec $0 \leq i \leq k$) :

- des moyens $40_i$ de multiplication du signal désétalé $18_c$ par le code orthogonal Hi propre au canal concerné, de façon à obtenir un signal désétalé $41_{c,i}$ propre au canal concerné, au débit N*D ;
- des moyens $20_i$ de sommation sur N échantillons, générant un signal sommé $21_{c,i}$ propre au canal concerné, au débit D, à partir du signal désétalé $41_{c,i}$ propre au canal concerné ;
- des moyens $22_{c,i}$ de regénération du signal d'entrée $2_{c,i}$ du canal concerné à partir du signal sommé $21_{c,i}$ propre au canal concerné. Avec une régénération parfaite, le signal régénéré $23_{c,i}$ est égal au signal d'entrée $2_{c,i}$ (fig. 1C).

Les moyens précités de sommation $20_i$ et de regénération $22_{c,i}$ sont identiques à ceux, 20 et 22 respectivement, du premier mode de réalisation et ont donc déjà été décrits ci-dessus, en relation avec la figure 2A. On notera que c'est simplement par souci de simplification que sur la figure 2C, les moyens $22_{c,i}$ de regénération ne comprennent pas de moyens de traitement du type de ceux référencés 39 sur la figure 2A.

Dans ce troisième mode de réalisation, la boucle d'estimation et de correction du déphasage comprend :

- dans chacune des branches de traitement (par exemple pour la ième branche, avec $0 \leq i \leq k$), des moyens $24_{c,i}$ de prise de l'argument du signal sommé $21_{c,i}$ propre au canal concerné, et des moyens $26_{c,i}$ permettant de ramener l'argument du signal sommé $21_{c,i}$ propre au canal concerné dans la plage [- $\pi/2$, $\pi/2$[. La valeur signée ainsi obtenue constitue une estimation brute $27_{c,i}$ du déphasage. Les moyens $24_{c,i}$ et $26_{c,i}$ sont identiques à ceux, 24 et 26 respectivement, du premier mode de réalisation et ont donc déjà été décrits ci-dessus, en relation avec la figure 2A ;
- des moyens 42 de moyennage des estimations brute $27_{c,i}$ du déphasage, fournies par les différentes branches de traitement, de façon à obtenir une estimation moyenne $43_c$ du déphasage ;
- des moyens 28 de multiplication de l'estimation moyenne $43_a$ du déphasage par un scalaire prédéterminé (ou coefficient de boucle) $c_c$, de façon à régler les caractéristiques dynamiques de la boucle ;
- des moyens 30 d'intégration du signal résultant $29_c$ (en sortie des moyens 28 de multiplication) sur une durée prédéterminée, de façon à obtenir une estimation cumulée $31_c$ du déphasage ;

- des moyens 32 de soustraction de l'estimation cumulée $31_c$ du déphasage à la phase du signal démodulé $16_c$ (ou, selon une variante, à celle du signal désétalé $18_c$).

Les moyens précités de multiplication 28, d'intégration 30 et de soustraction 32 ont déjà été décrits ci-dessus, en relation avec la figure 2A.

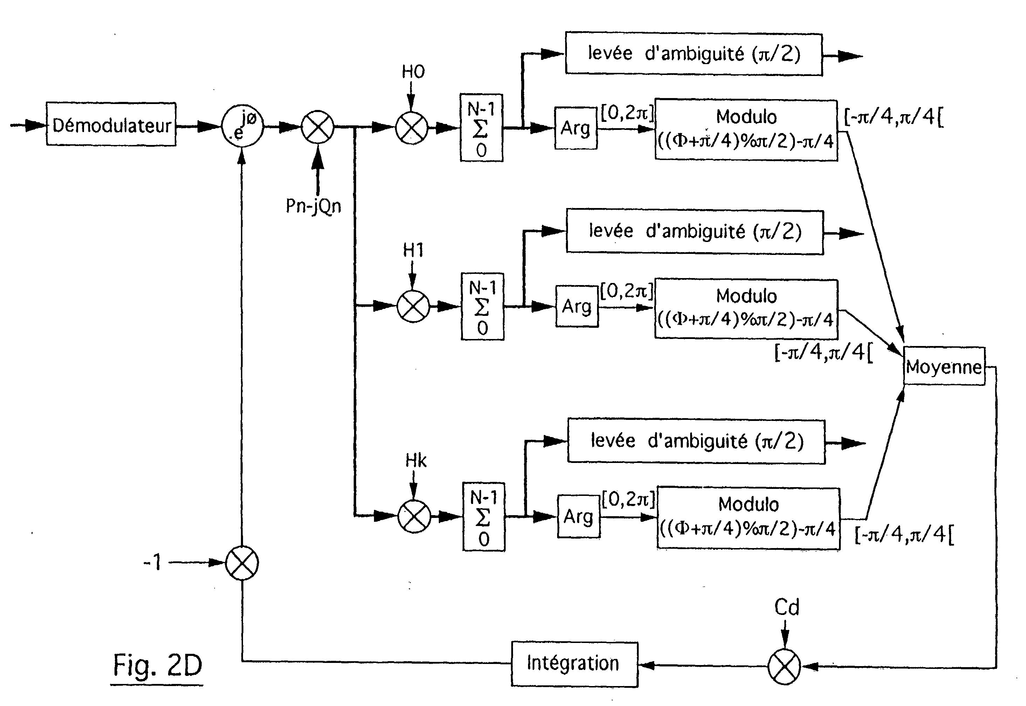

Dans le quatrième mode de réalisation présenté sur la figure 2D, le dispositif de démodulation cohérente est du type multicanaux et reçoit un signal $14_d$ résultant de la transmission, à travers un milieu de propagation donné, du signal $7_d$ émis par le dispositif de modulation $1_d$ de la figure 1D.

Ce quatrième mode de réalisation se déduit du troisième mode de réalisation de la même façon que le second mode de réalisation se déduit du premier mode de réalisation. Il ne nécessite donc pas une description spécifique.

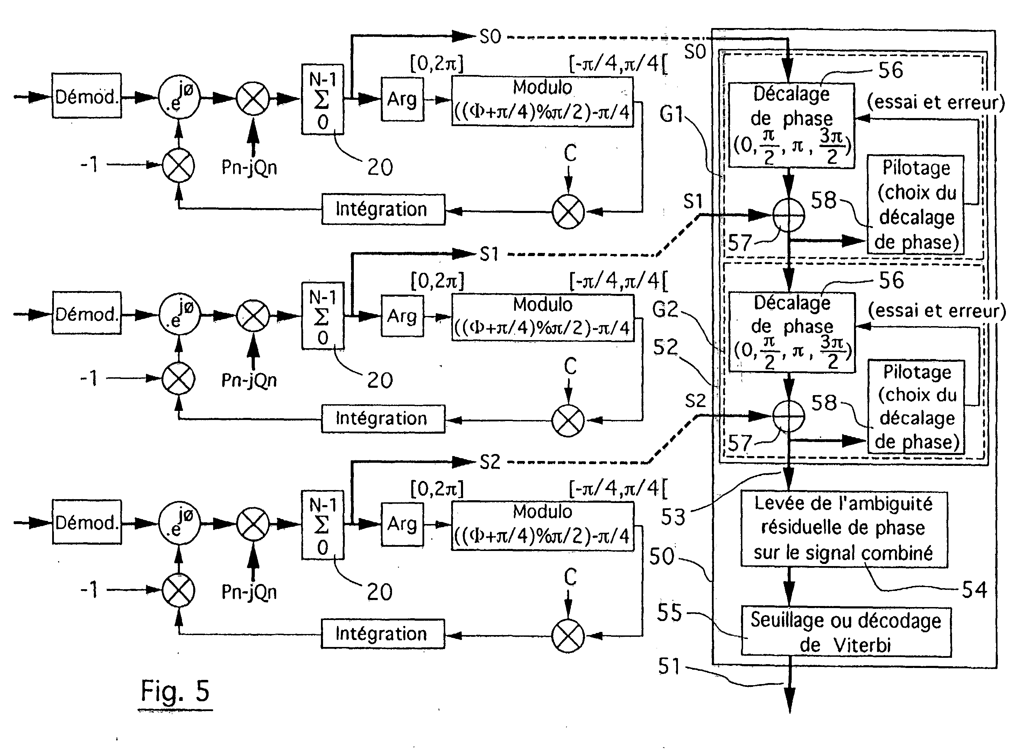

On présente maintenant, en relation avec la figure 5, un mode de réalisation particulier d'un ensemble, selon l'invention, de réception à plusieurs chemins de diversité. On rappelle que d'une façon générale, avec un tel ensemble de réception, il y autant de sources d'ambiguïtés statiques de phase que de chemins. Il convient donc de prendre des dispositions afin d'éviter le risque de combiner les différents chemins en opposition de phase. Ci-dessous, on présente précisément des moyens spécifiques à l'invention permettant une combinaison en phase des différents chemins de diversité.

L'ensemble de réception est par exemple un récepteur de type "RAKE", qui exploite le phénomène des trajets multiples pour apporter un gain de diversité. Le phénomène de trajets multiples est présent lorsque le signal reçu par le récepteur a traversé différents chemins associés à des retards électriques différents. Le récepteur de type "RAKE" tente de réaligner temporellement ces différentes composantes, puis de les recombiner en "phase" pour obtenir un gain maximum. On suppose ici que les différents chemins de diversité sont déjà réalignés temporellement.

Dans le mode de réalisation particulier présenté ici, l'ensemble de réception comprend trois dispositifs de type monocanal selon le second mode de réalisation présenté ci-dessus (en relation avec la figure 2B). En d'autres termes, il y a trois chemins de diversité sur l'unique canal, chacun des trois dispositifs de démodulation cohérente recevant un signal $14_b$, $14_b'$, $14_b''$ résultant de la transmission, à travers un milieu de propagation donné, du signal $7_b$ émis par le dispositif de modulation $1_b$ de la figure 1B.

L'ensemble de réception comprend donc trois boucles d'asservissement de la phase identiques à celle de la figure 2B, à savoir une pour chacun des trois dispositifs de démodulation cohérente.

Par ailleurs, l'ensemble de réception comprend des moyens 50 de regénération du signal d'entrée $2_b$ à partir des différents signaux sommés S0 à S2 fournis par les moyens 20 de sommation de chacun des trois dispositifs de démodulation cohérente. On notera que sur la figure 2B, le signal sommé (auquel correspond chacun de ces signaux sommés S0 à S2) est référencé $21_b$. Avec une régénération parfaite, le signal régénéré 51 est égal au signal d'entrée $2_b$ (fig.1A).

Les moyens 50 de regénération comprennent :

- des moyens 52 de combinaison en phase des différents signaux sommés S0 à S2, de façon à obtenir un signal combiné final 53 présentant un gain maximal (cf description détaillée ci-dessous) ;
- des moyens 54 de levée de l'ambiguïté statique résiduelle de phase du signal combiné final 53, induite par l'application, sur chacun desdits chemins de diversité, de la fonction prédéterminée $f_b(\Phi)$ ;
- des moyens 55 de traitement (par exemple seuillage ou décodage de type Viterbi) du signal issu des moyens 54 de levée de l'ambiguïté de phase sur le signal combiné final, de façon à obtenir le signal régénéré 51.

Dans le mode de réalisation de la figure 5, les moyens 52 de combinaison comprennent $n_G$ (= 2) groupes G1, G2 de moyens en cascade. D'une façon générale, on prend : $n_G = n_S - 1$, où $n_S$ est le nombre de signaux sommés à combiner ($n_S = 2$ dans l'exemple présenté). Chaque groupe G1, G2 de moyens comprend :

- des moyens 56 de décalage de phase, permettant de décaler de 0, $\pi/2$, $\pi$ ou $3\pi/2$ la phase du premier signal sommé S0 (cas du premier groupe G1) ou d'un signal combiné $S_c$ présent en sortie d'un groupe de moyens précédent (cas par exemple du second groupe G2), de façon à générer un signal sommé à phase décalée $S_d$ ;
- des moyens 57 d'addition du signal sommé à phase décalée $S_d$ avec un autre des différents signaux sommés, de façon à générer un signal combiné $S_c$ ;
- des moyens 58 de pilotage des moyens 56 de décalage de phase, assurant un choix final de la valeur de décalage (0, $\pi/2$, n ou $3\pi/2$) tel que le signal combiné $S_c$ présente un gain maximal (par exemple, valeur absolue maximale en sortie de la sommation (57)). Ceci peut peut être réalisé par un processus de type essai et erreur.

C'est le signal combiné $S_c$ généré par le dernier groupe G2 de moyens qui constitue le signal combiné final 53.

En fonctionnement, un groupe G1, G2 de moyens ne reçoit le signal combiné $S_c$ généré par le groupe de moyens précédent que lorsque les moyens 58 de pilotage de ce groupe de moyens précédent ont effectué leur choix final.

En résumé, avec le premier groupe G1, on combine les premier et second signaux sommés S0, S1.

Puis, avec le second groupe G2, on combine la combinaison précédente (des deux premier et second signaux sommés S0, S1) avec le troisième signal sommé S2.

Le principe est donc généralisable à un plus grand nombre de signaux sommés (c'est-à-dire de chemins). En effet, à chaque étape, on ajoute le chemin n à la somme des chemins n-1 affectée d'un déphasage statique choisi dans {0, $\pi/2$, $\pi$, $3\pi/2$}.

En outre, on peut aisément passer de cet exemple (où le signal d'entrée est complexe) au cas où le signal d'entrée est réel. En effet, il suffit pour cela de remplacer l'ensemble de valeurs de décalage de phase {0, $\pi/2$, $\pi$, $3\pi/2$} par l'ensemble {0, $\pi$}.

A la lecture de ce qui précède, on peut également généraliser l'invention au cas où l'ensemble de réception comprend un nombre quelconque ($\geq$ 2) de dispositifs de démodulation cohérente sans pilote.

De même, les dispositifs de démodulation cohérente compris dans l'ensemble de réception peuvent être réalisés selon l'un quelconque des trois autres modes de réalisation présentés ci-dessus (en relation avec les figures 2A, 2C et 2D respectivement).

On notera que pour la généralisation au cas où les dispositifs de démodulation cohérente sont du type multicanaux (troisième et quatrième modes de réalisation, fig.2C et 2D), il convient de reprendre les explications données en relation avec la figure 5 (cas où les dispositifs de démodulation cohérente sont du type monocanal) en les appliquant à chacun des canaux. En effet, la diversité de chemins s'applique dans le cas multicanaux à chacun des canaux.

## Revendications

1. Dispositif monocanal de démodulation cohérente, du type visant à régénérer, à partir d'un signal reçu ($14_a$ ; $14_b$), un signal d'entrée ($1_a$ ; $1_b$) d'un dispositif monocanal de modulation à étalement complexe d'ordre N, ledit dispositif monocanal de modulation à étalement complexe faisant subir audit signal d'entrée un étalement complexe puis une modulation en quadrature, de façon à obtenir un signal à émettre ($7_a$ ; $7_b$), ledit signal d'entrée présentant un débit D, ledit signal à émettre et ledit signal reçu présentant chacun un débit N*D,
**caractérisé en ce qu'**il comprend notamment :

- des moyens (15) de démodulation en quadrature, générant un signal démodulé ($16_a$ ; $16_b$), au débit N*D, à partir dudit signal reçu ;
- des moyens (17) de désétalement complexe, générant un signal désétalé ($18_a$ ; $18_b$), au débit N*D, à partir dudit signal démodulé ;
- des moyens (20) de sommation sur N échantillons, générant un signal sommé ($21_a$ ; $21_b$), au débit D, à partir dudit signal désétalé ;
- une boucle d'estimation et de correction du déphasage induit sur ledit signal démodulé, ladite boucle comprenant :

* des moyens (24) de prise de l'argument dudit signal sommé ;
* des moyens ($26_a$ ; $26_b$) d'application d'une fonction prédéterminée permettant de ramener l'argument du signal sommé dans une plage $[-\pi/(2.x), \pi/(2,x)[$, où x est égal à 1 ou 2 selon que ledit signal d'entrée est réel ou complexe, le résultat de l'application de ladite fonction prédéterminée audit argument du signal sommé constituant une estimation ($27_a$ ; $27_b$) dudit déphasage ;
* des moyens (32) de soustraction de ladite estimation du déphasage à la phase dudit signal démodulé ou à celle dudit signal désétalé ;

- des moyens (22) de regénération dudit signal d'entrée à partir dudit signal sommé, comprenant eux-mêmes des moyens ($38_a$ ; $38_b$) de levée d'une ambiguïté statique résiduelle de phase induite par l'application de ladite fonction prédéterminée.

2. Dispositif multicanaux de démodulation cohérente, du type visant à régénérer, à partir d'un signal reçu ($14_c$ ; $14_d$), une pluralité de signaux d'entrée ($2_{c,0}$ à $2_{c,k}$ ; $2_{d,0}$ à $2_{d,k}$) d'un dispositif multicanaux de modulation à étalement complexe d'ordre N, ledit dispositif multicanaux de modulation faisant subir à chacun desdits signaux d'entrée une multiplication par un code orthogonal distinct, de façon à obtenir une pluralité de canaux ($11_{c,0}$ à $11_{c,k}$ ; $11_{d,0}$ à $11_{d,k}$), ladite pluralité de canaux étant regroupés sur un même signal multicanaux ($13_c$ ; $13_d$), ledit signal multicanaux subissant un étalement complexe puis une modulation en quadrature, de façon à obtenir un signal à émettre ($7_c$ ; $7_d$), chacun desdits signaux d'entrée présentant un débit D, ledit signal à émettre et ledit signal reçu présentant chacun un débit N*D,

ledit dispositif multicanaux de démodulation cohérente comprenant notamment :

- des moyens (15) de démodulation en quadrature, générant un signal démodulé ($16_c$ ; $16_d$), au débit N*D, à partir dudit signal reçu ;
- des moyens (17) de désétalement complexe, générant un signal désétalé ($18_c$ ; $18_d$), au débit N*D, à partir dudit signal démodulé,

**caractérisé en ce que** ledit dispositif multicanal de démodulation cohérente comprend en outre :

- une pluralité de branches de traitement, chacune associée à un canal donné parmi ladite pluralité et comprenant notamment :

* des moyens ($40_0$ à $40_k$) de multiplication dudit signal désétalé par le code orthogonal ($H_0$ à $H_k$) propre audit canal donné, de façon à obtenir un signal désétalé ($41_{c,0}$ à $41_{c,k}$ ; $41_{d,0}$ à $41_{d,k}$) propre audit canal donné, au débit N*D ;
* des moyens ($20_0$ à $20_k$) de sommation sur N échantillons, générant un signal sommé ($21_{c,0}$ à $21_{c,k}$ ; $21_{d,0}$ à $21_{d,k}$) propre audit canal donné, au débit D, à partir dudit signal désétalé propre audit canal donné ;

- une boucle d'estimation et de correction du déphasage induit sur ledit signal démodulé, ladite boucle comprenant :

  * dans chacune desdites branches de traitement :

    - des moyens ($24_{c,0}$ à $24_{c,k}$ ; $24_{d,0}$ à $24_{d,k}$) de prise de l'argument dudit signal sommé propre audit canal donné ;
    - des moyens ($26_{c,0}$ à $26_{c,k}$ ; $26_{d,0}$ à $26_{d,k}$) d'application d'une fonction prédéterminée permettant de ramener l'argument du signal sommé propre audit canal donné dans une plage $[-\pi/(2.x), \pi/(2.x)[$, où x est égal à 1 ou 2 selon que ledit signal d'entrée dudit canal donné est réel ou complexe, le résultat de l'application de ladite fonction prédéterminée audit argument du signal sommé propre audit canal donné constituant une estimation ($27_{c,0}$ à $27_{c,k}$ ; $27_{d,0}$ à $27_{d,k}$) dudit déphasage ;

  * des moyens (42) de moyennage des estimations dudit déphasage fournies par lesdites branches de traitement, de façon à obtenir une estimation moyenne ($43_c$ ; $43_d$) dudit déphasage ;
  * des moyens (32) de soustraction de ladite estimation moyenne du déphasage à la phase dudit signal démodulé ou à celle dudit signal désétalé;

- dans chacune desdites branches de traitement, des moyens ($22_{c,0}$ à $22_{c,k}$ ; $22_{d,0}$ à $22_{d,k}$) de regénération dudit signal d'entrée dudit canal donné à partir dudit signal sommé propre audit canal donné, comprenant eux-mêmes des moyens de levée d'une ambiguité statique résiduelle de phase induite par l'application de ladite fonction prédéterminée.

**3.** Dispositif selon l'une quelconque des revendications 1 et 2, **caractérisé en ce que** ladite fonction prédéterminée peut s'écrire : f(Φ) = ((Φ + π/(2.x)) % (π/x)) - π/(2.x), où % est la fonction "modulo".

**4.** Dispositif selon l'une quelconque des revendications 1 à 3, **caractérisé en ce que** ladite boucle comprend en outre au moins certains des moyens appartenant au groupe comprenant :

- des moyens (28) de multiplication de ladite estimation du déphasage, ou de ladite estimation moyenne du déphasage, par un scalaire prédéterminé, de façon à régler les caractéristiques dynamiques de ladite boucle ;
- des moyens (30) d'intégration de ladite estimation du déphasage, ou de ladite estimation moyenne du déphasage, sur une durée prédéterminée, de façon à obtenir une estimation cumulée dudit déphasage.

**5.** Dispositif selon l'une quelconque des revendications 1 à 4, **caractérisé en ce que** ledit ou chacun desdits signaux d'entrée appartient au groupe comprenant :

- les signaux d'entrée réels au débit D (cas x = 1) ;
- les signaux d'entrée complexes au débit D (cas x = 2), générés chacun par un convertisseur série/parallèle 1 vers 2, à partir d'un signal source réel au débit 2*D.

**6.** Dispositif selon l'une quelconque des revendications 1 à 5, **caractérisé en ce que** lesdits moyens de regénération du signal d'entrée ou de chacun desdits signaux d'entrée comprennent en outre au moins certains des moyens appartenant au groupe comprenant :

- des moyens (36) de prise de la partie réelle, si ledit signal d'entrée est un signal réel ;
- des moyens (39) de seuillage ;
- des moyens (39) de décodage de type Viterbi, si des moyens de codage convolutif sont mis en oeuvre à l'émission.

**7.** Dispositif selon l'une quelconque des revendications 1 à 6, **caractérisé en ce que** lesdits moyens de levée d'une ambiguïté statique résiduelle de phase comprennent des moyens de codage/décodage différentiel.

**8.** Dispositif selon l'une quelconque des revendications 1 à 7, des moyens de codage convolutif étant mis en oeuvre à l'émission, lesdits moyens de regénération du signal d'entrée comprenant des moyens (39) de décodage de type Viterbi,

**caractérisé en ce que** lesdits moyens ($38_a$ ; $38_b$) de levée d'une ambiguïté statique résiduelle de phase comprennent :

- des moyens ($38_{a,x}$ ; $38_{b,x}$) de décalage de phase, permettant de décaler, d'une valeur choisie parmi un ensemble prédéterminé de valeurs, la phase du signal présent en entrée desdits moyens de décodage de type Viterbi ;
- des moyens ($38_{a,y}$ ; $38_{b,y}$) d'analyse du signal en sortie desdits moyens de décodage de type Viterbi, indiquant auxdits moyens de décalage de phase le choix d'une des valeurs de décalage, en fonction du résultat de ladite analyse.

**9.** Dispositif selon la revendication 8, **caractérisé en ce que** ledit ensemble prédéterminé de valeurs de décalage de phase comprend les valeurs suivantes :

- 0 et π, si ledit ou chacun desdits signaux d'entrée est un signal réel ;
- 0, π/2, π et 3π/2, si ledit ou chacun desdits signaux d'entrée est un signal complexe.

**10.** Ensemble de réception comprenant au moins deux dispositifs monocanal ou multicanaux de démodulation cohérente selon l'une quelconque des revendications 1 à 9, correspondant chacun à un chemin de diversité distinct,
**caractérisé en ce qu'**il comprend, pour ledit signal d'entrée ou pour chacun desdits signaux d'entrée, des moyens (50) de regénération dudit signal d'entrée à partir des différents signaux sommés (S0 à S2) fournis par les moyens (20) de sommation de chacun desdits chemins de diversité,
et **en ce que** lesdits moyens (50) de regénération comprennent eux-mêmes :

- des moyens (52) de combinaison desdits différents signaux sommés, de façon à obtenir un signal combiné final (53) présentant un gain maximal ;
- des moyens (54) de levée de l'ambiguïté statique résiduelle de phase dudit signal combiné final, induite par l'application, sur chacun desdits chemins de diversité, de ladite fonction prédéterminée.

**11.** Ensemble selon la revendication 10, **caractérisé en ce que** lesdits moyens (52) de combinaison des différents signaux sommés comprennent $n_G$ groupe(s) de moyens (G1, G2) en cascade, avec $n_G = n_S$ - 1, où $n_s$ est le nombre de signaux sommés à combiner ($n_S \geq 2$), chaque groupe de moyens comprenant :

- des moyens (56) de décalage de phase, permettant de décaler, d'une valeur choisie parmi un ensemble prédéterminé de valeurs, la phase d'un premier desdits différents signaux sommés ou d'un signal combiné présent en sortie d'un groupe de moyens précédent, de façon à générer un signal sommé à phase décalée ;

- des moyens (57) d'addition dudit signal sommé à phase décalée avec un autre desdits différents signaux sommés, de façon à générer un signal combiné ;

- des moyens (58) de pilotage desdits moyens de décalage de phase, assurant un choix final de la valeur de décalage tel que ledit signal combiné présente un gain maximal,

un groupe de moyens ne recevant le signal combiné généré par le groupe de moyens précédent que lorsque lesdits moyens de pilotage dudit groupe de moyens précédent ont effectué ledit choix final, le signal combiné généré par le dernier groupe de moyens constituant ledit signal combiné final.

12. Ensemble selon la revendication 11, **caractérisé en ce que** ledit ensemble prédéterminé de valeurs de décalage de phase comprend les valeurs suivantes :

- 0 et π, si ledit ou chacun desdits signaux d'entrée est un signal réel ;
- 0, π/2, π et 3π/2, si ledit ou chacun desdits signaux d'entrée est un signal complexe.


**Patentansprüche**

1. Einkanalvorrichtung für kohärente Demodulation des Typs, der darauf abzielt, ausgehend von einem empfangenen Signal ($14_a$ ; $14_b$) ein Eingangssignal ($1_a$ ; $1_b$) einer Einkanalvorrichtung für eine Modulation mit komplexer Spreizung der Größenordnung N zu regenerieren, wobei diese Einkanalvorrichtung für eine Modulation mit komplexer Spreizung das Eingangssignal einer komplexen Spreizung und anschließend einer Quadraturmodulation unterzieht, um so ein zu sendendes Signal ($7_a$ ; $7_b$) zu erhalten, wobei das Eingangssignal eine Übertragungsrate D aufweist und wobei das zu sendende Signal und das empfangene Signal jeweils eine Übertragungsrate N*D aufweisen, **dadurch gekennzeichnet, dass** sie insbesondere aufweisen:

- Quadraturdemodulationsvorrichtungen (15), die ein demoduliertes Signal ($16_a$ ; $16_b$) mit der Übertragungsrate N*D ausgehend von dem empfangenen Signal erzeugen;
- Vorrichtungen (17) zur komplexen Entspreizung, die ein entspreiztes Signal ($18_a$ ; $18_b$) mit

der Übertragungsrate N*D ausgehend von dem demodulierten Signal erzeugen;

- Vorrichtungen (20) zur Summierung über N Abtastwerte, die ein Summensignal ($21_a$ ; $21_b$) mit der Übertragungsrate D ausgehend von dem entspreizten Signal erzeugen;

- einen Regelkreis zur Schätzung und Korrektur der Phasenverschiebung, die auf dem demodulierten Signal verursacht wurde, wobei dieser Regelkreis aufweist:

   * Vorrichtungen (24) zur Erfassung des Arguments des Summensignals;
   * Vorrichtungen ($26_a$ ; $26_b$) zur Anwendung einer festgelegten Funktion, mit der das Argument des Summensignals in einen Bereich $[-\pi/(2.x), \pi/(2.x)]$ gebracht werden kann, wobei x gleich 1 oder 2 ist, je nachdem, ob dieses Eingangssignal reell oder komplex ist, und wobei das Ergebnis der Anwendung dieser festgelegten Funktion auf das Argument des Summensignals eine Schätzung ($27_a$ ; $27_b$) der Phasenverschiebung darstellt;
   * Vorrichtungen (32) zur Subtraktion der Phasenverschiebungsschätzung von der Phase des demodulierten Signals oder von jener des entspreizten Signals;

- Vorrichtungen (22) zur Regeneration des Eingangssignals ausgehend von dem Summensignal, wobei diese selbst Vorrichtungen ($38_a$ ; $38_b$) zur Aufhebung einer statischen Rest-Phasenambiguität aufweisen, die durch die Anwendung der festgelegten Funktion verursacht wird.

2. Mehrkanalvorrichtung für kohärente Demodulation des Typs, der darauf abzielt, ausgehend von einem empfangenen Signal ($14_c$ ; $14_d$) eine Vielzahl von Eingangssignalen ($2_{c,0}$ bis $2_{c,k}$ ; $2_{d,0}$ bis $2_{d,k}$) einer Mehrkanal-Modulationsvorrichtung mit komplexer Spreizung der Größenordnung N zu regenerieren, wobei die Mehrkanal-Modulationsvorrichtung auf jedes der Eingangssignale eine Multiplikation mit einem distinkten orthogonalen Code in der Weise anwendet, dass man eine Vielzahl von Kanälen ($11_{c,0}$ bis $11_{c,k}$ ; $11_{d,0}$ bis $11_{d,k}$)erhält, wobei diese Vielzahl von Kanälen auf demselben Mehrkanalsignal ($13_c$ ; $13_d$) zusammengefasst ist und wobei das Mehrkanalsignal einer komplexen Spreizung und anschließend einer Quadraturmodulation unterzogen wird, und zwar in der Weise, dass man ein zu sendendes Signal ($7_c$ ; $7_d$) erhält, wobei jedes der Eingangssignale eine Übertragungsrate D aufweist und das zu sendende Signal und das empfangene Signal jeweils eine Übertragungsrate N*D aufweisen, hierbei weist die Mehrkanalvorrichtung zur kohärenten Demodulation insbesondere auf:

- Quadraturdemodulationsvorrichtungen (15), die ein demoduliertes Signal ($16_c$ ; $16_d$) mit der Übertragungsrate N*D ausgehend von dem empfangenen Signal erzeugen;
- Vorrichtungen (17) zur komplexen Entspreizung, die ein entspreiztes Signal ($18_c$ ; $18_d$) mit der Übertragungsrate N*D ausgehend von dem demodulierten Signal erzeugen;

**dadurch gekennzeichnet, dass** die Mehrkanalvorrichtung zur kohärenten Demodulation außerdem aufweist:

- eine Vielzahl von Verarbeitungszweigen, von denen jeder einem bestimmten Kanal aus dieser Vielzahl zugeordnet ist, und insbesondere aufweisend:

  * Vorrichtungen ($40_0$ bis $40_k$) zur Multiplikation des entspreizten Signals mit dem für den bestimmten Kanal spezifischen orthogonalen Code, sodass man ein für diesen bestimmten Kanal spezifisches entspreiztes Signal ($41_{c,0}$ bis $41_{c,k}$ ; $41_{d,0}$ bis $41_{d,k}$) mit der Übertragungsrate N*D erhält;
  * Vorrichtungen ($20_0$ bis $20_k$) zur Summierung über N Abtastwerte, die ein für den bestimmten Kanal spezifisches Summensignal ($21_{c,0}$ bis $21_{c,k}$ ; $21_{d,0}$ bis $21_{d,k}$)mit der Übertragungsrate D ausgehend von dem für den bestimmten Kanal spezifischen entspreizten Signal erzeugen;

- einen Regelkreis zur Schätzung und Korrektur der Phasenverschiebung, die auf dem demodulierten Signal verursacht wurde, wobei dieser Regelkreis aufweist:

  * in jedem der Verarbeitungszweige:

    - Vorrichtungen ($24_{c,0}$ bis $24_{c,k}$ ; $24_{d,0}$ bis $24_{d,k}$)zur Erfassung des Arguments des für den bestimmten Kanal spezifischen Summensignals;
    - Vorrichtungen ($26_{c,0}$ bis $26_{c,k}$ ; $26_{d,0}$ bis $26_{d,k}$) zur Anwendung einer festgelegten Funktion, mit der das Argument des für den bestimmten Kanal spezifischen Summensignals in einen Bereich $[-\pi/(2.x), \pi/(2.x)]$ gebracht werden kann, wobei x gleich 1 oder 2 ist, je nachdem, ob dieses für den bestimmten Kanal spezifische Eingangssignal reell oder komplex ist, und wobei das Ergebnis der Anwendung dieser festgelegten Funktion auf das Argument des für den bestimmten Kanal spezifischen Summensignals eine Schätzung ($27_{c,0}$ bis $27_{c,k}$ ; $27_{d,0}$ bis $27_{d,k}$) der Phasenverschiebung darstellt;

  * Vorrichtungen (42) zur Mittelung der Schätzungen der Phasenverschiebung, die von den Verarbeitungszweigen geliefert wurden, sodass man eine mittlere Schätzung ($43_c$ ; $43_d$) dieser Phasenverschiebung erhält;
  * Vorrichtungen (32) zur Subtraktion der mittleren Phasenverschiebungsschätzung von der Phase des demodulierten Signals oder von jener des entspreizten Signals;

- in jedem der Verarbeitungszweige Vorrichtungen ($22_{c,0}$ bis $22_{c,k}$ ; $22_{d,0}$ bis $22_{d,k}$) zur Regeneration des für den bestimmten Kanal spezifischen Eingangssignals ausgehend von dem für den bestimmten Kanal spezifischen Summensignal, wobei diese selbst Vorrichtungen zur Aufhebung einer statischen Rest-Phasenambiguität aufweisen, die durch die Anwendung der festgelegten Funktion verursacht wird.

3. Vorrichtung nach einem beliebigen der Ansprüche 1 und 2, **dadurch gekennzeichnet, dass** die festgelegte Funktion geschrieben werden kann als: $(\Phi) = ((\Phi + \pi/(2.x)) \% (\pi/x)) - \pi/(2.x)$, wobei % die Modulo-Funktion ist.

4. Vorrichtung nach einem beliebigen der Ansprüche 1 bis 3, **dadurch gekennzeichnet, dass** der Regelkreis außerdem mindestens einige der Vorrichtungen umfasst, welche zu der Gruppe gehören, die aufweist:

- Vorrichtungen (28) zur Multiplikation der Phasenverschiebungsschätzung oder der mittleren Phasenverschiebungsschätzung mit einem festgelegten Skalar in der Weise, dass die dynamischen Merkmale des Regelkreises geregelt werden;
- Vorrichtungen (30) zur Integration der Phasenverschiebungsschätzung oder der mittleren Phasenverschiebungsschätzung über einer festgelegten Dauer in der Weise, dass man eine kumulierte Schätzung dieser Phasenverschiebung erhält.

5. Vorrichtung nach einem beliebigen der Ansprüche 1 bis 4, **dadurch gekennzeichnet, dass** das oder jedes der Eingangssignale zu der Gruppe gehört, die aufweist:

- die reellen Eingangssignale mit einer Übertragungsrate D (Fall von x = 1);
- die komplexen Eingangssignale mit einer Übertragungsrate D (Fall von x = 2), die jeweils durch einen Seriell-Parallel-Umsetzer von 1 nach 2 ausgehend von einem reellen Quellsignal mit der Übertragungsrate 2*D erzeugt werden.

6. Vorrichtung nach einem beliebigen der Ansprüche 1 bis 5, **dadurch gekennzeichnet, dass** die Vorrichtungen zur Regeneration des Eingangssignals oder jedes der Eingangssignale unter anderem mindestens einige der Vorrichtungen umfassen, welche zu der Gruppe gehören, die aufweist:

   - Vorrichtungen (36) zur Erfassung des reellen Teils, wenn das Eingangssignal ein reelles Signal ist;
   - Vorrichtungen (39) zum Schwellenwertvergleich;
   - Decodiervorrichtungen (39) vom Typ eines Viterbi-Decoeders, wenn beim Senden mit einem Faltungscode arbeitende Codiervorrichtungen eingesetzt werden.

7. Vorrichtung nach einem beliebigen der Ansprüche 1 bis 6, **dadurch gekennzeichnet, dass** die Vorrichtungen zur Aufhebung der statischen Rest-Phasenambiguität differentielle Codier-/Decodiervorrichtungen aufweisen.

8. Vorrichtung nach einem beliebigen der Ansprüche 1 bis 7, wobei beim Senden mit einem Faltungscode arbeitende Codiervorrichtungen zum Einsatz kommen und wobei Vorrichtungen zur Regeneration des Eingangssignals Decodiervorrichtungen (39) vom Typ eines Viterbi-Decoders aufweisen, **dadurch gekennzeichnet, dass** die Vorrichtungen $(38_a ; 38_b)$ zur Aufhebung der statischen Rest-Phasenambiguität aufweisen:

   - Phasenverschiebungsvorrichtungen $(38_{a,x} ; 38_{b,x})$ mit denen die Phase des am Eingang der Viterbi-Decodiervorrichtungen vorliegen Signals um einen Wert verschoben werden kann, der aus einer festgelegten Menge von Werten gewählt wird;
   - Vorrichtungen $(38_{a,y} ; 38_{b,y})$ zur Analyse des Signals am Ausgang der Viterbi-Decodiervorrichtungen, die den Phasenverschiebungsvorrichtungen die Wahl eines der Verschiebungswerte in Abhängigkeit vom Ergebnis dieser Analyse anzeigen.

9. Vorrichtung nach Anspruch 8, **dadurch gekennzeichnet, dass** die festgelegte Menge von Phasenverschiebungswerten folgende Werte umfasst:

   - 0 und $\pi$, wenn das oder jedes der Eingangssignal ein reelles Signal ist;
   - 0, $\pi/2$, $\pi$ und $3\pi/2$, wenn das oder jedes der Eingangssignale ein komplexes Signal ist.

10. Empfangsbaugruppe, die mindestens zwei Einkanal- oder Mehrkanalvorrichtungen zur kohärenten Demodulation nach einem beliebigen der Ansprüche 1 bis 9 aufweist, von denen jede einem eindeutigen Diversity-Pfad entspricht,
    **dadurch gekennzeichnet, dass** die Baugruppe für das Eingangssignal oder für jedes der Eingangssignale Vorrichtungen (50) zur Regeneration dieses Eingangssignals ausgehend von verschiedenen Summensignalen (S0 bis S2) aufweist, die von Summiervorrichtungen (20) jedes dieser Diversity-Pfade geliefert werden;
    und dadurch, dass die Regenerationsvorrichtungen (50) ihrerseits aufweisen:

    - Vorrichtungen (52) zur Kombination der verschiedenen Summensignale in der Weise, dass man ein kombiniertes Endsignal (53) erhält, welches eine maximale Verstärkung aufweist;
    - Vorrichtungen (54) zur Aufhebung der statischen Rest-Phasenambiguität des kombinierten Endsignals, die durch die Anwendung der festgelegten Funktion auf jeden der Diversity-Pfade verursacht wird.

11. Baugruppe nach Anspruch 10, **dadurch gekennzeichnet, dass** die Vorrichtungen (52) zur Kombination der verschiedenen Summensignale $n_G$ Gruppe(n) von in Kaskade geschalteten Vorrichtungen (G1, G2) mit $n_G = n_S - 1$ umfassen, wobei $n_S$ gleich der Anzahl der zu kombinierenden Summensignale ($n_S \geq 2$) ist und wobei jede Gruppe von Vorrichtungen aufweist:

    - Phasenverschiebungsvorrichtungen (56), mit denen die Phase eines ersten der verschiedenen Summensignale oder eines kombinierten Signals, das am Ausgang einer vorhergehenden Gruppe von Vorrichtungen vorliegt, um einen Wert verschoben werden kann, der aus einer festgelegten Menge von Werten gewählt wird, und zwar in der Weise, dass ein phasenverschobenes Summensignal erzeugt wird;
    - Vorrichtungen (57) zur Addition des phasenverschobenen Summensignals mit einem anderen der verschiedenen Summensignale in der Weise, dass ein kombiniertes Signal erzeugt wird;
    - Steuervorrichtungen (58) für diese Phasenverschiebungsvorrichtungen, die eine Endauswahl des Verschiebungswertes in der Weise vornehmen, dass das kombinierte Signal eine maximale Verstärkung aufweist;

hierbei empfängt eine Gruppe von Vorrichtungen das von der vorhergehenden Gruppe von Vorrichtungen erzeugte kombinierte Signal nur dann, wenn die Steuervorrichtungen der vorhergehenden Gruppe von Vorrichtungen diese Endauswahl durchgeführt haben;

wobei das von der letzten Gruppe von Vorrichtungen erzeugte Signal das kombinierte Endsignal darstellt.

12. Baugruppe nach Anspruch 11, **dadurch gekennzeichnet, dass** die festgelegte Menge von Phasenverschiebungswerten folgende Werte umfasst:

- 0 und $\pi$, wenn das oder jedes der Eingangssignal ein reelles Signal ist;
- 0, $\pi/2$, $\pi$ und $3\pi/2$, wenn das oder jedes der Eingangssignale ein komplexes Signal ist.

## Claims

1. A single-channel coherent demodulation device for regenerating, from a received signal ($14_a$ ; $14_b$), an input signal ($1_a$ ; $1_b$) of a single-channel Nth order complex spreading modulation device, said single-channel complex spreading modulation device applying to said input signal complex spreading followed by quadrature modulation to obtain a signal to be transmitted ($7_a$ ; $7_b$), said input signal having a bit rate D, said signal to be transmitted and said received signal each having a bit rate N*D, which device includes:

- quadrature demodulation means (15) generating a demodulated signal ($16_a$ ; $16_b$) at bit rate N*D from said received signal;
- complex despreading means (17) generating a despread signal ($18_a$ ; $18_b$) at bit rate N*D from said demodulated signal;
- means (20) for summing over N samples generating a summed signal ($21_a$ ; $21_b$) at bit rate D from said despread signal;
- a loop for estimating and correcting the phase shift induced in said demodulated signal, said loop comprising:

  * means (24) for sampling the argument of said summed signal;
  * means ($26_a$ ; $26_b$) for applying a predetermined function for moving the argument of the summed signal into a range [- $\pi/(2.x)$, $\pi/(2.x)$[, where $\underline{x}$ is equal to 1 or 2 according to whether said input signal is real or complex, the result of application of said predetermined function to said argument of the summed signal constituting an estimate ($27_a$ ; $27_b$) of said phase shift;

  * means (32) for subtracting said estimate of the phase shift from the phase of said demodulated signal or from that of said despread signal; and

- means (22) for regenerating said input signal from said summed signal, themselves comprising means ($38_a$ ; $38_b$) for resolving a residual static phase ambiguity induced by application of said predetermined function.

2. A multi-channel coherent demodulation device for regenerating, from a received signal ($14_a$ ; $14_d$), a plurality of input signals ($2_{c,0}$ to $2_{c,k}$ ; $2_{d,0}$ to $2_{d,k}$) of a multi-channel Nth order complex spreading modulation device, said multi-channel modulation device multiplying each of said input signals by a separate orthogonal code to obtain a plurality of channels ($11_{c,0}$ to $11_{c,k}$ ; $11_{d,0}$ to $11_{d,k}$), said plurality of channels being grouped on a common multi-channel signal ($13_c$ ; $13_d$), said multi-channel signal undergoing complex spreading followed by quadrature modulation to obtain a signal to be transmitted ($7_c$ ; $7_d$), each of said input signals having a bit rate D, said signal to transmit and said received signal each having a bit rate N*D, said multi-channel coherent demodulation device in particular including:

- quadrature demodulation means (15) generating a demodulated signal ($16_c$ ; $16_d$) at bit rate N*D from said received signal; and
- complex despreading means (17) generating a despread signal ($18_c$ ; $18_d$) at bit rate N*D from said demodulated signal;

  **characterized in that** said multi-channel coherent demodulation device further includes:

- a plurality of processing branches each associated with a given channel from said plurality and in particular including:

  * means ($40_0$ to $40_k$) for multiplication of said despreading signal by the orthogonal code ($H_0$ to $H_k$) specific to said given channel to obtain a despread signal ($41_{c,0}$ to $41_{c,k}$ ; $41_{d,0}$ to $41_{d,k}$) specific to said given channel at bit rate N*D; and
  * means ($20_0$ to $20_k$) for summing over N samples generating a summed signal ($21_{c,0}$ to $21_{c,k}$ ; $21_{d,0}$ to $21_{d,k}$) specific to said given channel at bit rate D from said despread signal specific to said given channel;

- a loop for estimating and correcting the phase shift induced in said demodulated signal, said loop comprising:

*   in each of said processing branches:

    -   means ($24_{c,0}$ to $24_{c,k}$ ; $24_{d,0}$ to $24_{d,k}$) for sampling the argument of said summed signal specific to said given channel;
    -   means ($26_{c,0}$ to $26_{c,k}$ ; $26_{d,0}$ to $26_{d,k}$) for applying a predetermined function to move the argument of the summed signal specific to said given channel into a range [- $\pi/(2.x)$, $\pi/(2.x)$[, where $x$ is equal to 1 or 2 according to whether said input channel of said given channel is real or complex, the result of application of said predetermined function to said argument of the summed signal specific to said given channel constituting an estimate ($27_{c,0}$ to $27_{c,k}$ ; $27_{d,0}$ to $27_{d,k}$) of said phase shift;

*   means (42) for averaging estimates of said phase shift supplied by said processing branches to obtain an average estimate ($43_c$ ; $43_d$) of said phase shift; and
*   means (32) for subtracting said average estimate of the phase-shift from the phase of said demodulated signal or from that of said despreading signal; and

    -   in each of said processing branches, means ($22_{c,0}$ to $22_{c,k}$ ; $22_{d,0}$ to $22_{d,k}$) for regenerating said input signal of said given channel from said summed signal specific to said given channel, themselves comprising means for resolving a residual static phase ambiguity induced by application of said predetermined function.

3.  A device according to claim 1 or claim 2 wherein said predetermined function can be written: f($\Phi$) = (($\Phi$ + $\pi/(2.x)$) % ($\pi/x$)) - $\pi/(2.x)$, where % is the "modulo" function.

4.  A device according to any one of claims 1 to 3 wherein said loop further comprises at least some of the means belonging to the group comprising:

    -   means for multiplying said estimate of the phase shift or said average estimate of the phase shift by a predetermined scalar quantity to adjust the dynamic characteristics of said loop; and
    -   means for integrating said estimate of the phase shift or said average estimate of the phase shift over a predetermined time period to obtain a cumulative estimate of said phase shift.

5.  Device according to any one of claims 1 to 4 wherein said input signal or each of said input signals belongs to the group comprising:

    -   the real input signals at bit rate D (x = 1); and
    -   the complex input signals at bit rate D (x = 2), each generated by a 1 to 2 serial/parallel converter from a real source signal at bit rate 2*D.

6.  A device according to any one of claims 1 to 5 wherein said means for generating the input signal or each of said input signals further comprise at least some of the means belonging to the group comprising:

    -   means (36) for sampling the real part if said input signal is a real signal;
    -   threshold means (39); and
    -   Viterbi decoding means (39) if convolutional encoding means are used by the transmitter.

7.  A device according to any one of claims 1 to 6 wherein said means for resolving a residual static phase ambiguity comprise differential encoding/decoding means.

8.  A device according to any one of claims 1 to 7, convolutional encoding means being used by the transmitter, said means for regenerating the input signal comprising Viterbi decoding means (39),
    **characterized in that** said means ($38_a$ ; $38_b$) for resolving a residual static phase ambiguity comprise:

    -   phase shifting means ($38_{a,x}$ ; $38_{b,x}$) for shifting the phase of the signal at the input of said Viterbi decoding means by a value chosen from a predetermined set of values; and
    -   means ($38_{a,y}$ ; $38_{b,y}$) for analyzing the signal at the output of said Viterbi decoding means, indicating to said phase shifter means the choice of one of the phase shift values according to the result of said analysis.

9.  A device according to claim 8 wherein said predetermined set of phase shift values comprises the following values:

    -   0 and $\pi$ if said input signal or each of said input signals is a real signal; or
    -   0, $\pi/2$, $\pi$ or $3\pi/2$ if said input signal or each of said input signals is a complex signal.

10. A receiving system comprising at least two single-channel or multi-channel coherent demodulation devices according to any one of claims 1 to 9 each corresponding to a separate diversity path, and, for said input signal or for each of said input signals, means (50) for regenerating said input signal from summed signals (S0 to S2) supplied by the summing means (20) of each of said diversity paths, and in that said regeneration means (50) themselves comprise:

- means (52) for combining said various summed signals to obtain a final combined signal (53) having a maximum gain; and
- means (54) for resolving the residual static phase ambiguity of said final combined signal, induced by the application, on each of said diversity paths, of said predetermined function.

11. A system according to claim 10 wherein said means (52) for combining the summed signals comprise $n_G$ group(s) of means ($G^1$, $G^2$) in cascade, where $n_G = n_S - 1$ where $n_S$ is the number of summed signals to be combined ($n_S \geq 2$), each group of means comprising:

- phase shifter means (56) for shifting the phase of a first of said summed signals or of a combined signal at the output of a preceding group of means by a value chosen from a predetermined set of values to generate a phase shifted summed signal;
- means (57) for adding said phase shifted summed signal to another of said summed signals to generate a combined signal; and
- means (58) for controlling said phase shifter means assuring, a final choice of the phase shift value such that the combined signal has a maximal gain,

a group of means receiving the combined signal generated by the preceding group of means only when said control means of said preceding group of means have effected said final choice, the combined signal generated by the final group of means constituting said final combined signal.

12. A system according to claim 11 wherein said predetermined set of phase shift values comprises the following values:

- 0 and $\pi$ if said input signal or each of said input signals is a real signal, or
- 0, $\pi/2$, $\pi$ and $3\pi/2$ if said input signal or each of said input signals is a complex signal.

Fig. 1A

Fig. 1B

Fig. 1C

Fig. 1D

EP 0 899 895 B1

## Fig. 2A

14a · 15 · 16a · 34 · 36 · 22 · 17 · 18a · 20

Démodulateur

(ND) (ND) $.e^{j\emptyset}$ (ND) (ND) $\sum_0^{N-1}$

32

-1 →

Pn-jQn

19

33

31a

30

R → levée d'ambiguité (π) → Seuillage ou décodage de Viterbi → 23a

37a · 38a · 39

(D) Arg $[0,2\pi]$ → Modulo $((\Phi+\pi/2)\%\pi)-\pi/2$ $[-\pi/2,\pi/2[$

21a · 24 · 25a · 29a · 26a · 27a

Intégration ← Ca · 28

## Fig. 2B

14b · 16b · 18b · 22

Démodulateur $.e^{j\emptyset}$ $\sum_0^{N-1}$

-1 →

Pn-jQn

levée d'ambiguité (π/2) → Seuillage ou décodage de Viterbi → 23b

38b

Arg $[0,2\pi]$ → Modulo $((\Phi+\pi/4)\%\pi/2)-\pi/4$ $[-\pi/4,\pi/4[$

21b · 25b · 26b · 27b

Intégration ← Cb

Fig. 2C

Fig. 2D

39

23a

Décalage de phase
de 0 ou π

Décodeur
de Viterbi

38a,x

(0 ou π)

Comparaison
de la métrique
cumulée par
rapport à un seuil

38a,y

Fig. 3

38a

39

23b

Décalage de phase
de 0 ou $\frac{\pi}{2}$ ou π ou $\frac{3\pi}{2}$

Décodeur
de Viterbi

38b,x

(0 ou $\frac{\pi}{2}$ ou π ou $\frac{3\pi}{2}$)

Comparaison
de la métrique
cumulée par
rapport à un seuil

38b,y

Fig. 4

38b

Fig. 5

EP 0 899 895 B1